# EUROPÄISCHE PATENTSCHRIFT

(11) **EP 1 554 903 B1**
(45) Veröffentlichungstag und Bekanntmachung des Hinweises auf die Patenterteilung: **17.12.2008**
(21) Anmeldenummer: 03750528.6
(22) Anmeldetag: 11.09.2003
(51) Int. Cl.: H04Q 7/34

(54) **NACHRICHTENÜBERTRAGUNGSSYSTEM UND VERFAHREN ZUR NUTZUNG VON SIM-KARTEN ÜBER FERNZUGRIFF FÜR KOSTENGÜNSTIGE VERBINDUNGEN ZWISCHEN FEST- UND MOBILFUNKNETZEN**
MESSAGE TRANSMISSION SYSTEM AND METHOD FOR USING SIM CARDS VIA REMOTE ACCESS FOR ECONOMICAL CONNECTIONS BETWEEN FIXED AND MOBILE RADIO TELEPHONE NETWORKS
SYSTEME DE TRANSMISSION DE MESSAGES ET PROCEDE D'UTILISATION DE CARTES SIM PAR ACCES A DISTANCE POUR COMMUNICATIONS ECONOMIQUES ENTRE DES RESEAUX DE RADIOTELEPHONIE FIXE ET DE TELEPHONIE MOBILE

(30) Priorität: 21.10.2002 DE 10249086
(43) Veröffentlichungstag der Anmeldung: 20.07.2005
(73) Patentinhaber: Teles AG Informationstechnologien, 10587 Berlin (DE)
(72) Erfinder: KRAUSE, Jürgen, 91320 Ebermannstadt (DE); PETER, Wolfgang, 91327 Gössweinstein (DE); BANKEN, Hans, 91126 Schwabach (DE); LÖHLEIN, Martin, 90530 Wendelstein (DE); BERGMANN, Reinhard, 91126 Schwabach (DE)
(74) Vertreter: Dreykorn-Lindner, Werner
(86) Internationale Anmeldenummer: PCT/EP2003/010130
(87) Internationale Veröffentlichungsnummer: WO 2004/039113

(56) Entgegenhaltungen:
- EP-A- 1 357 732
- WO-A-02/069656
- DE-C- 19 620 164
- DE-C- 19 831 929

## Beschreibung

Die Erfindung betrifft in erster Linie ein Nachrichtenübertragungssystem zur Nutzung von SIM-Karten über Fernzugriff Patentanspruch. 1). Weiterhin betrifft die Erfindung ein Verfahren zur Nutzung von SIM-Karten über Fernzugriff (Patentanspruch 7).

Es ist es bekannt, dass zur Nutzung von Mobilstationen im GSM-Mobilfunknetz (Global System for Mobile Communication) eine sogenannte SIM-Karte (Subscriber Identity Module = Teilnehmeridentitätsmodul) notwendig ist, die den Zugriff auf die entsprechenden Netze ermöglicht. Zur Authentisierung des Mobilfunkteilnehmers ist auf der SIM-Karte ein Identifikationskey gespeichert, wobei der Identifikationskey auch der Vermittlungsstelle (MSC Mobile Switching Center, dort abgelegt im "Home Location Register") bekannt ist. Das Authentikationsverfahren beruht auf einem Vergleich von Rechenergebnissen, die parallel in der SIM-Karte und in der Vermittlungsstelle ermittelt werden. Während der Authentisierung bekommt die Mobilstation von der Vermittlungsstelle eine Zufallszahl gesendet und berechnet aus dieser Zahl und dem auf der Chipkarte gespeicherten Identifizierungskey nach einem festgelegten Algorithmus einen Zahlenwert. Bei Gleichheit der Ergebnisse ist die Teilnehmerauthentität gewährleistet. Jede Authentikation führt zu einer neuen Berechnung unter Anwendung einer neuen Eingabegröße, wodurch Fehlgebühren durch Manipulationen ausgeschlossen werden.

Für den Fall, dass das Teilnehmeridentitätsmodul "geknackt" wird, haben Dritte die Möglichkeit eines unberechtigten "Klonens" (SIM-card cloning), was dazu führt, dass der Unberechtigte Sprach- und Datenverbindungen mit der nachgeahmten Karte auf Kosten des Karteninhabers nutzen kann.

Um für Testzwecke Zugang zum Mobilfunknetz zu erhalten, ist es oft notwendig, eine Mobilstation zu simulieren. Der simulierte "Mobilfunkteilnehmer" muss dem realen Netz bekannt sein, wobei zur Simulation die SIM-Karte mit dem entsprechenden Identifizierungskey notwendig ist. Auch im Rahmen der Roamingtests wird auf Grundlage des Identifizierungskeys geprüft, ob die von einem Mobilfunkteilnehmer in seinem Heimatnetz, bzw. in seiner Heimatlokation, abonnierten Dienste im besuchten Netz, bzw. Lokation, auch verfügbar sind. Weiterhin ist es auch von Interesse, mit welcher Qualität die im GSM- Mobilfunknetz angebotenen Dienste verfügbar sind. Da die Netzfunktionen und Dienste in einer Art getestet werden sollen, wie ein Teilnehmer sie tatsächlich benutzt, werden diese von den Teilnehmerschnittstellen aus getestet. Wichtig sind dabei die Teilnehmerschnittstellen an der Luftschnittstelle, d.h. zur Mobilstation, und am Festnetz für herkömmliche, analoge und ISDN-Teilnehmeranschlüsse (Integrated Services Digital Network) sowie Tests der internen Schnittstellen des GSM- Mobilfunknetzes, wie z.B. die sog. A-Schnittstelle am MSC. Um die volle Verfügbarkeit der Dienste der eigenen und der "roamenden" Mobilfunkteilnehmer jederzeit sicherzustellen, muss also in jeder Location mit jedem SIM getestet werden, was wiederum in jeder Location eine große Anzahl SIMS notwendig macht.

Um Tests in effizienter Weise möglichst zentral von einem einzigen Ort aus über bereits existierende Datennetze durchführen zu können, ist beispielsweise aus der DE 198 31 929 C1 eine Testanordnung zur Prüfung der Übertragungswege mittels sogenannter Testmodule bekannt, wobei die Teilnehmer-Mobilstationen mit einem den Teilnehmer identifizierenden Subscriber Identification Module ausgerüstet sind, dessen Daten in mindestens einer Datenbank eines Vermittlungssystems zumindest teilweise gespeichert sind. Die Mobilstation ist statt der SIM-Karte mit einem Adaptermodul ausgestattet, das selektiv mit jeweils einem von einer Mehrzahl von SIM-Karten verbindbar ist, so dass die jeweils verbundene SIM-Karte in der mit dem Adaptermodul versehenen Mobilstation emuliert wird. Weiterhin sind ein zentraler SIM-Server zur Aufnahme der SIM-Karten und eine zentral angeordnete Steuereinrichtung vorgesehen, welche die Auswahl und Verbindung der SIM-Karten mit der das Adaptermodul enthaltenden Mobilstation steuert. Die räumlich verteilten unterschiedlichen Testmodule enthalten zumindest teilweise mit Adaptermodulen versehene Mobilstationen und der SIM-Server, die Steuereinrichtung und die Testmodule sind über ein die Vermittlungssysteme verbindendes Datennetz verbunden. Zumindest ein Teil der räumlich verteilten Testmodule enthält Software, die eine Mobilstation simuliert und auf die SIM-Karte im SIM-Server Zugriff hat. Es sind auch gleichzeitig mehrere Tests durch die Steuereinheit durchführbar, wobei mehrere der räumlich verteilten, mit Adaptermodulen versehenen Mobilstationen in bestimmten Testmodulen auf den SIM-Server zugreifen. Es kann auch der SIM-Server statt über das Datennetz unmittelbar mit der Steuereinrichtung verbunden sein oder SIM-Server und Steuereinrichtung bilden eine Einheit. Der SIM-Server kann auch aus modularen Einheiten aufgebaut werden, wobei jede der Einheiten eine Vielzahl von SIM-Karten, beispielweise bis zu 568 SIM-Karten, aufnehmen kann, und die modularen Einheiten werden gemeinsam von der Steuereinrichtung gesteuert. Bei dem in der DE 198 31 929 C1 ebenfalls beschriebenen Verfahren wird selektiv jede der mit einen Adaptermodul ausgerüsteten, räumlich verteilten Mobilstationen mit jeweils einer der SIM-Karten im SIM-Server zumindest virtuell verbunden, so dass jede selektierte Mobilstation die jeweils verbundene SIM-Karte emuliert, und bestimmte räumlich verteilte Testmodule werden von diesen mit Adaptermodulen versehenen Mobilstationen über das Datennetz angesteuert. Dabei wird selektiv jeweils eines der räumlich verteilten Testmodule einem der mit einen Adaptermodul ausgerüsteten, räumlich verteilten Mobilstationen zugeordnet und die Verbindung bzw. Zuordnung erfolgt durch die zentral angeordnete Steuereinrichtung. Dadurch ist es möglich, die Verfügbarkeit der zur Verfügung gestellten Dienste ständig zu überprüfen sowie diese Tests ständig zu ändern und, wenn erforderlich, den geänderten Anforderungen anzupassen.

Um die Tests von Roaming-Beziehungen zu vereinfachen, ist aus der DE 195 25 276 C1 ein Verfahren bekannt, bei dem in einem realen Mobilfunknetz zumindest eine Mobilstation und eine Vermittlungsstelle sowie die Authentisierungssequenz zwischen der Mobilstation und der Vermittlungsstelle unter Umgehung des Einsatzes realer SIM-Karten simuliert werden. Weiterhin wird bei der Standortaktualisierung (Location Update Sequenz), bei der die Ortsinformation der Mobilstation aktualisiert wird, ein Zellenwechsel der Mobilstation zwischen der simulierten Vermittlungsstelle und einer realen Vermittlungsstelle simuliert, so dass die aktuelle, reale Vermittlungsstelle von der vorhergehenden, simulierten Vermittlungsstelle bereits errechnete Authentisierungsdaten (Authentication Sets) abfragt, welche dieser nun beliebig vorgegeben werden können. Dadurch kann die Authentisierungssequenz simuliert werden, so dass nachfolgende Tests im Wirknetz vereinfacht werden. Die Simulation setzt also an der sogenannten A-Schnittstelle auf, welche die Funk-Feststationen der einzelnen Zellen mit den hierarisch höher liegenden Vermittlungsstellen verbindet. Es werden also die Protokoll- und Datensequenzen zwischen simulierter Mobilstation und realen bzw. simulierten Feststationen simuliert.

Um zu ermöglichen, dass für Tests in GSM-Netzen am Messort die SIM-Karte physikalisch nicht vorhanden sein muss, ist es aus der DE 100 11 986 A1 bekannt, die SIM-Karte zu simulieren und dadurch SIM-Karte und Mobilteil räumlich zu trennen. Dabei ist keine Begrenzung der räumlichen Trennung erforderlich, eine beliebige Zuordnung der SIM-Karten zu beliebigen Mobilteilen und umgekehrt ist möglich und es kann eine Standarddatenübertragungstechnologie benutzt werden. Vorzugsweise werden alle Informationen oder nur die funktionsrelevanten Information von der SIM-Karte zum Mobilteil und umgekehrt übertragen. Die Nachbildung der nicht funktionsrelevanten Information lokal zur SIM-Karte und die Nachbildung der nicht funktionsrelevanten Information lokal zum Mobilteil sowie die Steuerung der Verbindung SIM-Karte und Mobilteil erfolgt durch externes Equipment. In dieser Konfiguration wird das Mobilteil mit den Daten der SIM-Karte versorgt und das Mobilteil reagiert so, wie wenn die SIM-Karte stecken würde. Das Mobilteil kann nun alle erforderlichen Tests durchführen, so dass die SIM-Karten nur in der Anzahl vorhanden sein müssen, welche für die Tests minimal notwendig sind.

Weiterhin ist aus der DE 199 10 385 A1 ein Verfahren und ein Funk-Kommunikationsnetz zur Sicherung eines in einer Mobilstation angeordneten Teilnehmeridentitätsmoduls (SIM-Karte) bekannt. Dabei wird netzseitig, ausgehend davon, dass mobilstationsseitig eine Aktualisierung der Betreuung des Teilnehmers bei einem Wechsel des Versorgungsgebiets in einem Funk-Kommunikationsnetz initiiert wird und netzseitig in einer bisher zuständigen Teilnehmerdatenbasis gespeicherte Daten des Teilnehmers gelöscht werden, eine Funkrufnachricht zusätzlich in das alte Versorgungsgebiet zu Mobilstationen ausgesendet. Durch die zusätzliche Funkrufnachricht (Paging) in das alte Versorgungsgebiet, in dem sich der mobile Teilnehmer aber gar nicht mehr aufhält, prüft das Netz, ob eine weitere Mobilstation noch aktiv ist und auf das "Paging" mit derselben Teilnehmerkennung wie die des berechtigten Teilnehmers antwortet. Ist dies der Fall, liefert die Auswertung der empfangenen Teilnehmerkennung einen Hinweis auf zumindest eine weitere unberechtigterweise mit dem gleichen Teilnehmeridentitätsmodul aktive Mobilstation. Weiterhin kann vorgesehen werden, dass eine Ortsinformation über den mobilen Teilnehmer bei Beantwortung der Funkrufnachricht von der Mobilstation zusammen mit der Teilnehmerkennung gesendet und netzseitig ausgewertet wird. Damit ergibt sich ein sicherer Schutz gegen das unberechtigte Zugreifen (cloning) auf das allein dem Kartennutzer vorbehaltene Teilnehmeridentitätsmodul.

Weiterhin ist aus der WO 02/069656 A2 eine Testanordnung zur Prüfung des Zugriffs mittels SIM-Karten unter Benutzung eines zentralen SIM-Servers und räumlich verteilten Testmodulen bekannt, bei der der SIM-Server und die Testmodule über ein die Vermittlungssysteme verbindendes Datennetz verbunden sind. Damit für die Tests am Messort die SIM-Karte physikalisch nicht vorhanden sein muss, weist das Testmodul zwei Mobilteile auf, wobei lediglich einem Mobilteil eine SIM-Karte zugeordnet ist. Die SIM-Karte des zweiten Mobilteils wird simuliert, wodurch SIM-Karte und Mobilteil räumlich trennbar sind. Hierzu werden alle Informationen oder nur die funktionsrelevanten Information von der SIM-Karte zum Mobilteil und umgekehrt übertragen.

Dazu ist der Steuerrechner zumindest virtuell mit der drahtgebundenen Kommunikationsschnittstelle des Mobilteilnehmers verbunden. Darüber hinaus weist der Steuerrechner, welcher als für sich bekannter Personalcomputer ausgeführt ist, Mittel zur Protokollierung der Testroutinen und der während der Tests anfallenden Gebühren auf. Demgemäß betrifft die Testanordnung gemäß der WO 02/069656 A2 ein zweistufiges Verfahren für den Netzzugang bzw. zum zentralen Server mittels zweier Funkmodule bzw. einem Funkmodul und einer speziellen digitalen Leitung mit vollständiger Übertragung aller Parameter eines Prüfauftrags während der verschiedenen Stufen und Abspeicherung dieser Parameter in der dezentralen Einrichtung. Dabei wird eine als "authentication" bzw. "authentication parameters" bezeichnete Information, welche Daten und Steuerbefehle umfasst, in Teilen übertragen. Der mehrstufige Verbindungsaufbau über verschiedene Netze und die Durchführung der Tests bedingen hierbei einen bestimmten Funktionsablauf auf der Basis der zwei Funkmodule, um die vollständigen Datensätze für jede einzelnen Prüfungsauftrag vorher zwischen zentralem Server und dezentraler Einrichtung zu übertragen und dort abzuspeichern bzw. den Datensatz zu aktualisieren. Dies bedingt unter anderem das Herstellen einer Verbindung zwischen den beiden Funkmodulen und die Übertragung der aktualisierten Datensätze oder Standleitungen mit hoher Übertragungsgeschwindigkeit. Die Testanordnung gemäß der WO 02/069656 A2 erfordert einen speziellen Systemautbau und ein zweistufiges Verfahren mit einer vollständigen Übertragung der Datensätze für jeden einzelnen Prüfungsauftrag vorher zwischen zentralem Server und dezentraler Einrichtung, bevor der Prüfungsauftrag durchgeführt werden kann und die dabei als Authentisierung bezeichnete übertragene Information umfasst sowohl Daten als auch Steuerbefehle.

Weiterhin ist aus der DE 196 20 164 C1 eine Testeinrichtung zur Überprüfung der Leitweglenkung und Gebührenerfassung in einem Mobilkommunikationsnetz sowie ein Verfahren zu dessen Betrieb bekannt. Um die Vielzahl der erforderlichen Tests zu automatisieren und dabei hinsichtlich der vorgenommenen Änderungen in dem zu testenden Mobilkommunikationsnetz zu systematisieren und den änderungsindividuellen Testablauf zu betreiben, weist die Testeinrichtung im einzelnen einen mit einer drahtgebundenen Kommunikationsschnittstelle ausgestatteten Mobilteilnehmer, eine Multiplexereinrichtung zur Aufnahme und wechselweisen Bedienung einer Mehrzahl von Datenmodulen und einen Steuerrechner auf. Dabei ist der Mobilteilnehmer anstelle des Datenmoduls (SIM-Karte) mit einem Adaptermodul ausgestattet, das mit der Multiplexereinrichtung derart verbunden ist, dass in Abhängigkeit vom Schaltzustand der Multiplexereinrichtung eine der SIM-Karten in dem Mobilteilnehmer emuliert ist. Zweckmäßigerweise sind die in der Multiplexereinrichtung bedienbaren Datenmodule in Heimatdatenbanken verschiedener Vermittlungssysteme registriert. Die Multiplexereinrichtung ist zur Aufnahme und wechselweisen Bedienung einer Mehrzahl von Datenmodulen ausgestattet und weist eine Mobilteilnehmerschnittstelle auf, die mit der Kommunikationsschnittstelle des Mobilteilnehmers verbunden ist. Darüber hinaus weist die Multiplexereinrichtung eine serielle Schnittstelle und eine parallele Schnittstelle zur Kommunikation mit dem Steuerrechner auf Der Steuerrechner ist dabei derart mit der Multiplexereinrichtung verbunden, dass jeweils eines der Datenmodule in der Multiplexereinrichtung selektiert ist und dass genau jenes selektierte Datenmodul im Mobilteilnehmer über das Adaptermodul emuliert ist. Ferner weist der Steuerrechner Speichermittel auf, in denen ein Programm geladen ist, das den Ablauf der einzelnen Testroutinen und deren Aufeinanderfolge bestimmt.

Schließlich ist aus der WO 02/19664 ein Verfahren und eine Vorrichtung zum ferngesteuerten Zugriff auf SIM-Karten unter Benutzung eines zentralen SIM-Servers, einer SIM-Kartenschnittstelle und eines routers bekannt. Dabei kann eine SIM-Karte gleichzeitig in verschiedenen Anwendungen genutzt werden und die Anwendung kann hierbei lokal aber auch entfernt angesiedelt werden. Verwendet werden kann jede Übertragungsstrecke, die eine Verzögerungszeit von < 10 ms garantiert (Bedingung des ATR: answer to reset). Die SIM-Karte kann von mehreren Benutzern gelesen werden und alle Meldungen werden 1:1 zwischen SIM-Karte und Anwendung ausgetauscht. Neben der logischen Simulation der SIM-Karte wird auch die physikalische Anwesenheit der SIM-Karte weitergegeben. Beim Auftreten eines Timeouts wird das Ziehen der SIM-Karte simuliert. Die SIM-Karte wird in jeder Einzelheit identisch der Applikation bereit gestellt. Die Zuordnung der SIM-Karten zur Zielanwendung und Wahl des physikalischen Übertragungsmediums wird nicht spezifiziert. Die Anwendung betrifft die gleichzeitige Weitergabe von einer SIM-Karte an verschiedene Applikationen (z.B. Daten, Voice, Fax , ....).

Wie die vorstehende Würdigung des Standes der Technik aufzeigt, sind für unterschiedliche Anwendungsfälle entsprechend ausgestaltete Verfahren unter Benutzung zentraler SIM-Server und simulierter SIM-Karten bekannt. Die Qualität eines Netzes kann nur gewährleistet werden, wenn in regelmäßigen Abständen Messungen der Netzqualität stattfinden. Für GSM-Netze sind dies insbesondere Tests der Übergänge in andere Netze, der Roamingfunktion, der verfügbaren Netzdienste (FAX, VOICE, DATA (CSD), HSCD, GPRS) und deren Kombinationen. GSM-Provider bzw. UMTS-Provider (UMTS Universal Mobile Telephone Service) schließen Roamingverträge mit vielen anderen weltweit operierenden Providern ab. Damit die Abrechnung und die Funktion überprüft werden kann, muss in jedem GSM-Netz oder UMTS-Netz mindestens eine SIM-Karte jedes Roamingpartners für Tests verfügbar sein. Soll die entsprechende Funktion an verschiedenen Orten innerhalb des GSM-Netzes oder UMTS-Netzes verifiziert werden, müssen die SIM-Karten in entsprechend hoher Zahl an jedem Messstandort vorgehalten bzw. simuliert werden. Durch die Simulation der SIM-Karten kann zwar die Gesamtanzahl der SIM-Karten gering gehalten werden. Zuwenig Beachtung findet jedoch, dass die Steuerung der zu übertragenden Informationen mittels zentralem SIM-Server bei simulierter SIM-Karte vor Ort in der Regel zeitkritisch ist. Beispielsweise muss in Mobilfunknetzwerken der ATR-Befehl (answer to reset) in der Regel innerhalb von 10 ms beantwortet werden. Deshalb fehlt in der Praxis ein Nachrichtenübertragungssystem zur Nutzung von SIM-Karten über Fernzugriff, bei welcher Übertragungsstrecken mit einer netzintemen Verzögerungszeit im Sekundenbereich benutzt werden können. Besonders bedeutsam ist dies, weil die Telekommunikations-Industrie als äußerst fortschrittliche, entwicklungsfreudige Industrie anzusehen ist, die sehr schnell Verbesserungen und Vereinfachungen aufgreift und in die Tat umsetzt.

Der Erfindung liegt gegenüber den bekannten Nachrichtenübertragungssystem und Verfahren zur Nutzung von SIM-Karten über Fernzugriff die Aufgabe zugrunde, ein solches Nachrichtenübertragungssystem und ein Verfahren hierzu zur Verfügung zu stellen, welches die Nutzung von Übertragungsstrecken mit einer netzinternen Verzögerungszeit im Sekundenbereich ermöglicht.

Diese Aufgabe wird, gemäß Patentanspruch 1, durch ein Nachrichtenübertragungssystem zur Nutzung von SIM-Karten über Fernzugriff mit einem zentral angeordneten SIM-Server, welcher über ein Übertragungsnetzwerk mit mindestens einer dezentralen Einrichtung in Verbindung steht, bei dem
- der SIM-Server ein SIM-Karten-Array mit zumindest in Zeilen angeordnete SIM-Karten und eine Einrichtung zur SIM-Verwaltung mit einem dem SIM-Karten-Array nachgeschalteten SIM-Multiplexer umfasst,
- die dezentrale Einrichtung einen SIM-Karten Emulator, eine SIM-Karten Schnittstelle und ein Funkmodul, aufweist und
- zum Fernzugriff der dezentralen Einrichtung im Speicher des SIM-Karten Emulators ein Profildatensatz zur SIM-Karten-Nachbildung abgelegt ist und
- nur die transparente Weitergabe von Authentisierungsdaten zwischen SIM-Karten Emulator und im SIM-Karten-Array befindlichen SIM-Karte über das Übertragungsnetzwerk erfolgt,
- so dass im Übertragungsnetzwerk lediglich eine Timeoutzeit zwischen 1 s bis 25,5 s einzuhalten ist
gelöst.

Das erfindungsgemäße Nachrichtenüberiragungssystem weist den Vorteil auf, dass auf überraschend einfache und kostengünstige Art und Weise der bei verteilten Installationen von GSM-Modulen hohe Verwaltungsaufwand und die bei jedem Wechsel der SIM-Karte anfallenden aufwendigen Wartungsvorgänge vermieden werden können, indem die SIM-Karte durch eine Emulation ersetzt wird. Hierbei können mit Ausnahme des Authentisierungsalgorithmus alle Funktionen lokal durch die Emulation nachgebildet werden. Die hierzu notwendigen Informationen wie z.B. Inhalt des Telefonbuchs, der SMS-Speicher und einzubindende Menüfunktionen werden in einem lokalen Profildatensatz abgelegt. Der für die Authentisierung eingesetzte GSM ALGORITHM (GSM11.11 Kapitel 7.2) wird mittels des Übertragungsnetzwerks über den SIM-Server direkt von der durch die Verwaltungssoftware festgelegten SIM-Karte des SIM-Karten-Arrays durchgeführt.

Weiterhin wird diese Aufgabe, nach Patentanspruch 7, durch ein Verfahren zur Nutzung von SIM-Karten über Fernzugriff mit einem zentral angeordneten SIM-Server, welcher über ein Übertragungsnetzwerk mit mindestens einer dezentralen Einrichtung, insbesondere einem Mobilfunkgateway, in Verbindung steht, bei dem
- zum Fernzugriff der dezentralen Einrichtung ein Profildatensatz zur SIM-Karten-Nachbildung abgespeichert ist,
- nur die transparente Weitergabe von Authentisierungsdaten zwischen SIM-Karten Emulator und SIM-Karte über das Übertragungsnetzwerk erfolgt,
- alle anderen Daten in der dezentralen Einrichtung simuliert werden,
- im Übertragungsnetzwerk lediglich eine Timeoutzeit zwischen 1 s bis 25,5 s einzuhalten ist,
gelöst.

Das erfindungsgemäße Verfahren weist den Vorteil auf, dass die für die SIM-Karten Emulation zu übertragende Datenmenge minimiert ist und dass die an das Übertragungsnetzwerk gestellten Anforderungen bezüglich Datenrate und Verzögerungszeiten gegenüber einer transparenten Weitergabe aller SIM-Karten erheblich herabgesetzt sind. Weiterhin können bei Anwendung des beschriebenen Verfahrens Protokollelemente und auch Datenübertragungsnetzwerke mit weit geringerer Übertragungsqualität ohne Einschränkung der Funktion verwendet werden. Schließlich sind die Sicherheitsbedingungen des SIM in jeder Hinsicht eingehalten, vorzugsweise durch die transparente Weitergabe der Authentisierungsdaten zwischen SIM-Emulation und physikalischer SIM-Karte.

In Weiterbildung der Erfingung weist, gemäß Patentanspruch 3, das SIM-Karten-Array weitere in Spalten angeordnete SIM-Karten auf und zwischen Übertragungsnetzwerk und SIM-Server ist mindestens ein Router angeordnet, welcher mit der Einrichtung zur SIM-Verwaltung und mit dem SIM-Karten-Array verbunden ist.

Diese Weiterbildung der Erfindung weist den Vorteil auf, dass durch den Einsatz von Routern das für die jeweilige Anwendung optimale Übertragungsnetzwerk gewählt werden kann, ohne dass das Systemdesign verändert werden muß.

Vorzugsweise sind, gemäß Patentanspruch 4, mehrere Router für die interne Kommunikation über ein lokales Netzwerk miteinander verbunden sind.

Diese Ausgestaltung weist den Vorteil einer beliebigen Skalierbarkeit des Systems auf.

In Weiterbildung der Erfindung werden, gemäß Patentanspruch 8, zeitkritische Telegramme, wie beispielsweise ATR (answer to reset), im Mobilfunkgateway erzeugt.

Mit dieser Weiterbildung wird der Schutz vor Einflussnahme Dritter weiter verbessert, da nur die Authentisierungsdaten über das Netzwerk übertragen werden. Diese sind implizit geschützt, so dass bei einer Verfälschung dieser Daten eine Authentisierung nicht möglich ist.

Weitere Vorteile und Einzelheiten lassen sich der nachfolgenden Beschreibung einer bevorzugten Ausführungsform der Erfindung unter Bezugnahme auf die Zeichnung entnehmen. In der Zeichnung zeigt:
- FIG. 1: eine Ausführungsform des erfindungsgemäßen Nachrichtenübertragungssystems zur Nutzung von SIM-Karten über Fernzugriff,
- FIG. 2: den erfindungsgemäßen SIM-Server im Detail und
- FIG. 3: die erfindungsgemäße dezentrale Einrichtung im Detail.

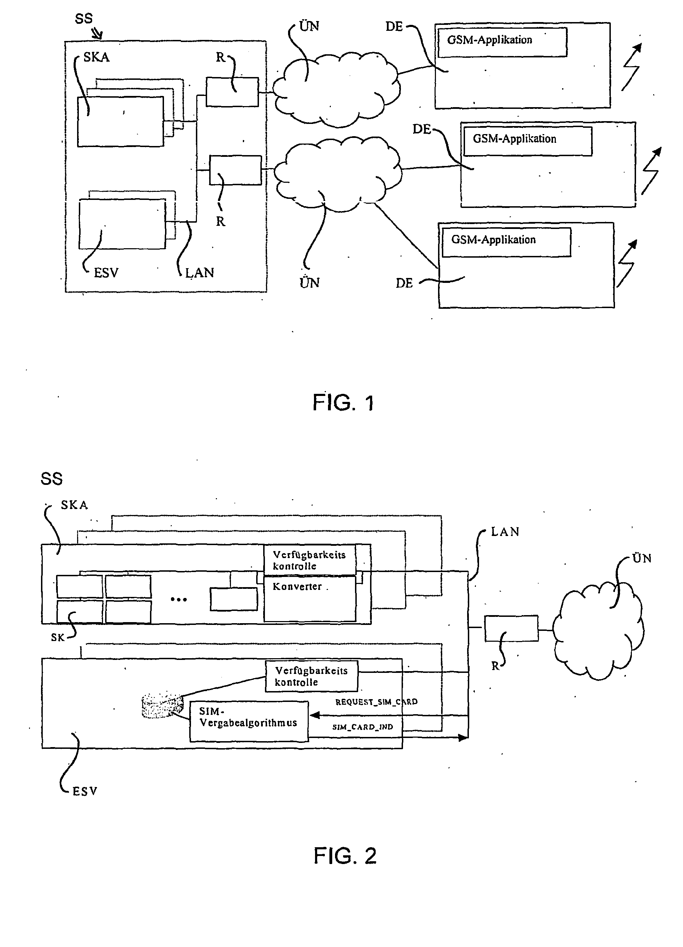

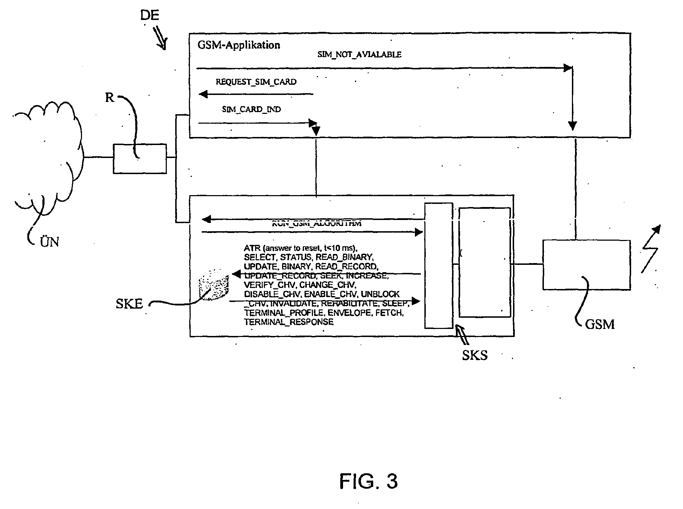

FIG. 1 zeigt eine Ausführungsform für die Topologie des erfindungsgemäßen Nachrichtenübertragungssystems und FIG. 2 sowie FIG. 3 Details eines erfindungsgemäßen SIM-Servers SS und einer dezentralen Einrichtung DE zur Nutzung von SIM-Karten über Fernzugriff.

Der SIM-Server SS umfasst ein SIM-Karten-Array SKA mit zumindest in Zeilen angeordnete Sim-Karten SK und eine Einrichtung zur SIM-Verwaltung ESV mit einem dem SIM-Karten-Array SKA nachgeschalteten SIM-Multiplexer. Über ein Übertraguhgsnetzwerk ÜN steht der SIM-Server SS mit einer dezentralen Einrichtung DE in Verbindung, welche einen SIM-Karten Emulator SKE und eine SIM-Karten Schnittstelle SKS aufweist. Zum Fernzugriff der dezentralen Einrichtung (DE) ist im Speicher des SIM-Karten Emulators (SKE) ein Profildatensatz zur SIM-Karten-Nachbildung abgelegt und es wird nur die Authentisierung über das Übertragungsnetzwerk ÜN übertragen.

Durch die Verwendung eines LAN als internes Kommunikationsmedium kann alleine durch Konfiguration des Übertragungsnetzwerks UN und Festlegung der LAN-Adressen das System beliebig skaliert werden. Infolge des Einsatzes von Routern R werden sowohl der SIM-Server SS als auch das dezentrale Einrichtung DE an das Übertragungsnetzwerk ÜN angebunden. Auf diese Weise kann das für die jeweilige Anwendung optimale Übertragungsnetzwerk ÜN gewählt werden, ohne das Systemdesign verändern zu müssen. Gesteuert über die Verwaltungssoftware in der SIM-Verwaltung ESV können so beliebig viele externe GSM-Endeinrichtungen gezielt auf verschiedene - durch im SIM-Karten-Array SKA hinterlegte SIM-Karten SK repräsentierte - GSM-Benutzerkonten einbuchen.

Beim erfindungsgemäßen Nachrichtenübertragungssystem sind die Komponenten zentrale Verwaltungs-Software der SIM-Verwaltung ESV (SIM-Assignment-Management), zentrales SIM-Karten-Array SKA mit Anbindung an das Übertragungsnetzwerk ÜN (SIM-Server SS), Übertragungsnetzwerk ÜN, dezentrale Probe (SIM-Karten Emulator SKE) und dezentrale GSM-Applikation GSMA funktionsmäßig miteinander verschmolzen. Die Aufgaben der zentralen Verwaltungs-Software sind:
- Oberfläche für die Verwaltung der SIM-Karten SK,
- Datenbank zur Speicherung der SIM-Karten Informationen,
- Zuweisung einer SIM-Karte SK auf Anfrage einer Applikation,
- Regelmäßige Überprüfung auf Verfügbarkeit der SIM-Karten SK im SIM-Karten-Array SKA; Weiterleitung dieser Information an die Applikation,
- Sperrung der zugewiesenen SIM-Karten SK gegenüber anderen Applikationen,
- Realisierung verschiedener Algorithmen für die Vergabe der SIM-Karten SK an die Applikationen durch:
   - Zufall,
   - Simulation bewegter SIM-Karten,
   - Round Robin,
   - ereignisgesteuert, insbesondere durch Zeit- oder Geldkontingent.

Durch die Verwendung eines LAN für die interne Kommunikation wird dabei eine Skalierbarkeit des Systems ermöglicht.

Die Aufgaben des SIM-Karten-Array SKA mit Anbindung an das Übertragungsnetzwerk ÜN sind:
- Bereitstellung des SIM-Interface im Übertragungsnetzwerk ÜN,
- Transparente Weitergabe der T0-Protokollelemente für jede SIM-Karte SK des SIM-Karten-Array SKA,
- Weitergabe der physikalischen Information "SIM-Karte verfügbar"

Insbesondere wird durch die Struktur des SIM-Multiplexers gewährleistet:
- dass das System beliebig skalierbar ist,
- dass eine SIM-Karte SK nur in einer Applikation verwendet wird (SIM-Assignment-Management),
- dass die zu übertragende Datenmenge minimiert (SIM-Emulation),
- dass die an das Übertragungsnetzwerk ÜN gestellten Anforderungen bezüglich Datenrate und Verzögerungszeiten - gegenüber einer transparenten Weitergabe aller SIM-Karten - erheblich herabgesetzt sind,
- dass für Protokollelemente auch Datenübertragungsnetzwerke mit weit geringerer Übertragungsqualität ohne Einschränkung der Funktion verwendet werden können,
- dass die Sicherheitsbedingungen des SIM in jeder Hinsicht eingehalten sind (transparente Weitergabe der Authentisierungsdaten zwischen SIM-Karten Emulator SKE und physikalischer SIM-Karte SK).

Die wesentlichen Anforderungen an das Übertragungsnetzwerk ÜN sind:
- netzinteme Verzögerungszeit < 25 s,
- Datendurchsatz > 1200 baud.
Bei Einsatz des erfindungsgemäßen Verfahrens muss das Übertragungsnetzwerk ÜN lediglich die Timeoutzeit des T=0 Protokolls einhalten (1 s bis 25,5 s). Bei einer transparenten Weitergabe der T=0-Protokollelemente, wie beim Stand der Technik, muss die netzinterne Verzögerungszeit < 10 ms (ISO 7816 3.2.b) sein. Diese Forderung kann von einigen Übertragungsmedien nicht eingehalten werden, wie z.B. GPRS, HSCSD oder CSD. Deshalb kann das erfindungsgemäßen Verfahren im Gegensatz zum transparenten Verfahren nach dem Stand der Technik für nahezu alle bekannten Übertragungsmedien (z.B. auch Wählverbindungen) eingesetzt werden.

Die Aufgaben des SIM-Karten Emulator SKE sind:
- Emulation der SIM-Karte für folgende Protokollelemente nach Vorgaben in lokalem Profildatensatz. Folgende Kommandos werden emuliert: ATR (answer to reset, wird <10 ms nach dem Reset gesendet), SELECT, STATUS, READ_BINARY, UPDATE, BINARY, READ_RECORD, UPDATE_RECORD, SEEK, INCREASE, VERIFY_CHV, CHANGE_CHV, DISABLE_CHV, ENABLE_CHV, UNBLOCK _CHV, INVALIDATE, REHABILITATE, SLEEP, TERMINAL_PROFILE, ENVELOPE, FETCH, TERMINAL__RESPONSE.
- Emulation der physikalischen Parameter (GSM 11.11, Kapitel 5; ATR, Baudrate, Klasse der SIM-Karte). In dem ATR-String überträgt der SIM-Kartenemulator SKE unter anderem den Parameter TC2. Dieser Parameter legt nach ISO7816 3.5.a die work waiting time fest: work waiting time = 960*TC2*1/9600 s; TC2 kann im Bereich von 10 bis 255 gewählt werden.
   -> work waiting time = 1 s bis 25,5 s.
- Emulation des Filesystems der SIM-Karte SK (GSM 11.11, Kapitel 6; Telefonbuch, SMS-Speicherplätze).
- Emulation des SIM-Karten Application Interface (GSM 11.11, Kapitel 11, erweiterte Menüeinträge, ...).
- Weitergabe der Authentisierungsaufforderung (RUN_GSM_ALGORITHM) über das Übertragungsnetzwerk ÜN an das SIM-Karten-Array SKA.
- Weitergabe der Antwort auf die Authentisierungsaufforderung an das GSM-Modul GSM.

Das erfindungsgemäße Nachrichtenübertragungssystem bildet die Basis für eine Vielzahl von anwenderspezifischen Varianten. Angefangen von Mobilbüros, Firmen mit Außendienst bis hin zu Unternehmen mit Fahrzeugflotte, Filialen etc. Aber auch für Carrier wie nationale und internationale Verbindungsnetzbetreiber, Teilnehmernetzbetreiber, Prepaid-Card-Betreiber etc. bietet das erfindungsgemäße Nachrichtenübertragungssystem eine kostengünstigere Terminierung von Mobilfunkgesprächen. Dabei werden unterschiedlichste Mobilfunknetze durch die GSM-Applikation GSMA unterstützt, welche umfasst:
- Anforderung einer SIM-Karte SK über die Verwaltungssoftware der SIM-Verwaltung ESV,
- Weitergabe der SIM-Kartenkennung an den SIM-Karten Emulator SKE,
- Start der eigentlichen GSM-Applikation,
- Abschalten des GSM-Moduls GSM, wenn "SIM-Karte nicht verfügbar" von der Verwaltungssoftware gemeldet wird,
- Applikationsspezifische Funktion (z.B. Least Cost Routing gegen Roaming-Gebühren, zeitabhängiges oder alternatives Routing, Call Detail Records, Management-Zugang über ISDN oder Intranet (IP), Rufverteilung auf 2 SIM-Karten pro GSM (4 SIM-Karten optional)).

Das erfindungsgemäße Nachrichtenübertragungssystem bzw. das erfindungsgemäße Verfahren ermöglichen das SIM-Roaming und die Terminierung von Gesprächen aus dem Festnetz ins Mobilfunknetz über GSM-Gateways. Vorzugsweise durch die Verwendung von Mobilfunk-Equipment mit zwei SIM-Karten (z.B. GPRS und GSM) kann über eine Online-Verbindung eine beliebige SIM-Karte SK aus dem SIM-Server SS kopiert werden. Die dezentrale Einheit DE arbeitet dann mit dieser "kopierten" SIM-Karte SK, wie wenn sie lokal vorhanden wäre, so dass immer die kostengünstigste Verbindung (SIM-Karte) gewählt werden kann. Da auch für die Online-Verbindung, nämlich für die SIM-Authisierung, Gebühren anfallen, können - je nach Gebührenmodell - die Kosten für Roaming nicht zu 100% eingespart werden. Die SIM-Karten SK sollen zur besseren Wartbarkeit der Systeme zentral gehalten werden. Hierzu muss die SIM-Karte SK vom eigentlichen System abgesetzt werden, wobei erfindungsgemäß eine eindeutige Zuordnung immer gegeben ist und es kann jede Übertragungsstrecke verwendet werden, die eine Verzögerungszeit von < 25 s garantiert. Insbesondere ist das erfindungsgemäße Nachrichtenübertragungssystem in jeder Version skalierbar und somit sowohl in kleineren Verbundnetzwerken als auch für den Einsatz bei großem Gesprächsvolumen, wie Least-Cost-Routing und Carrier-Applikationen, geeignet. Schließlich kann der erfindungsgemäße SIM-Server SS auch für die Mitnahme der Mobilfunkrufnummer zu einem anderen Provider (number portabilty) in vorteilhafter Weise genutzt werden.

Alle dargestellten und beschriebenen Ausführungsmöglichkeiten, sowie alle in der Beschreibung und/oder der Zeichnung offenbarten neuen Einzelmerkmale und ihre Kombination untereinander, sind erfindungswesentlich. Beispielsweise kann die Integration des SIM-Karten Emulators SKE in einem PC über Einsteckkarte erfolgen; die Konfiguration über PC-Windowsprogramm und ein komfortabler SMS-Versand vom PC aus durchgeführt werden; am PC ein Remotezugang für Fernwartung, -konfiguration und Download vorgesehen werden, so dass auch eine IP-Anbindung oder eine Überwachung, Management und Konfiguration über Fernwartung durchgeführt werden kann; Mobilfunkkanalgruppen mit unterschiedlichen Belegungsstrategien gebildet und Sprachführung für Benutzer vorgesehen werden usw.

## Patentansprüche

1. Nachrichtenübertragungssystem zur Nutzung von SIM-Karten (SK) über Fernzugriff mit einem zentral angeordneten SIM-Server (SS), welcher über ein Übertragungsnetzwerk (ÜN) mit mindestens einer dezentralen Einrichtung (DE) in Verbindung steht, bei dem
• der SIM-Server (SS) ein SIM-Karten-Array (SKA) mit zumindest in Zeilen angeordneten SIM-Karten (SK) und eine Einrichtung zur SIM-Verwaltung (ESV) mit einem dem SIM-Karten-Array (SKA) nachgeschalteten SIM-Multiplexer umfasst,
• die dezentrale Einrichtung (DE) einen SIM-Karten Emulator (SKE), eine SIM-Karten Schnittstelle (SKS) und ein Funkmodul (GSM), aufweist und
• zum Fernzugriff der dezentralen Einrichtung (DE) im Speicher des SIM-Karten Emulators (SKE) ein Profildatensatz zur SIM-Karten-Nachbildung abgelegt ist und
• nur die transparente Weitergabe von Authentisierungsdaten zwischen SIM-Karten Emulator (SKE) und im SIM-Karten-Array (SKA) befindlichen SIM-Karte (SK) über das Übertragungsnetzwerk (ÜN) erfolgt,
• so dass im Übertragungsnetzwerk (ÜN) lediglich eine Timeoutzeit zwischen 1 s bis 25,5 s einzuhalten ist.

2. Nachrichtenübertragungssystem nach Anspruch 1, **dadurch gekennzeichnet, dass** die dezentrale Einrichtung (DE) ein Mobilfunkgateway ist, wodurch ein SIM-Roaming und eine Terminierung von Gesprächen aus dem Festnetz ins Mobilfunknetz über das Mobilfunkgateway (DE) ermöglicht wird.

3. Nachrichtenübertragungssystem nach Anspruch 1, **dadurch gekennzeichnet, dass** das SIM-Karten-Array (SKA) weitere in Spalten angeordnete SIM-Karten (SK) aufweist und dass zwischen Übertragungsnetzwerk (ÜN) und SIM-Server (SS) mindestens ein Router (R) angeordnet ist, welcher mit der Einrichtung zur SIM-Verwaltung (ESV) und mit dem SIM-Karten-Array (SKA) verbunden ist.

4. Nachrichtenübertragungssystem nach Anspruch 3, **dadurch gekennzeichnet, dass** mehrere Router (R) für die interne Kommunikation über ein lokales Netzwerk (LAN) miteinander verbunden sind.

5. Nuchrichtenübertragungssystem nach Anspruch 1 und 2, **dadurch gekennzeichnet, dass** das Mobilfunkgateway (DE) eine Mobilfunk-Applikation (GSMA) aufweist, welche folgende Funktionen umfasst:
- Anforderung einer SIM-Karte (SK) über eine Verwaltungssoftware der Einrichtung zur SIM-Verwaltung (ESV),
- Weitergabe von SIM-Kartenkennung an den SIM-Karten Emulator (SKE),
- Start der eigentlichen Mobilfunk-Applikation,
- Abschalten des Funkmoduls (GSM), wenn "SIM-Karte nicht verfügbar" von der Verwaltungssoftware gemeldet wird und
- Applikationsspezifische Funktionen, nämlich Least Cost Routing gegen Roaming-Gebühren, zeitabhängiges oder alternatives Routing, Call Detail Records, Management-Zugang über ISDN oder Intranet (IP) und Rufverteilung auf 2 SIM-Karten oder 4 SIM-Karten pro Funkmodul (GSM).

6. Nachrichtenübertragungssystem nach Anspruch 5, **dadurch gekennzeichnet, dass** das Mobilfunkgateway (DE) als PC ausgestaltet ist und die Integration des SIM-Karten Emulators (SKE) über Einsteckkarte erfolgt, dass die Konfiguration über PC-Windowsprogramm und ein SMS-Versand vom PC aus durchgeführt werden und dass am PC ein Remotezugang für Fernwartung, -konfiguration und Download vorgesehen ist, so dass auch eine IP-Anbindung oder eine Überwachung, Management und Konfiguration über Fernwartung durchgeführt, Mobilfunkkanalgruppen mit unterschiedlichen Belegungsstrategien gebildet und Sprachführung für Benutzer durchgeführt werden kann.

7. Verfahren zur Nutzung von SIM-Karten über Fernzugriff mit einem zentral angeordneten SIM-Server (SS), welcher über ein Übertragungsnetzwerk (ÜN) mit mindestens einer dezentralen Einrichtung (DE), insbesondere einem Mobilfunkgateway (DE), in Verbindung steht, **bei dem**
• zum Fernzugriff der dezentralen Einrichtung (DE) ein Profildatensatz zur SIM-Karten-Nachbildung abgespeichert ist,
• nur die transparente Weitergabe von Authentisierungsdaten zwischen SIM-Karten Emulator (SKE) und SIM-Karte (SK) über das Übertragungsnetzwerk (ÜN) erfolgt,
• alle anderen Daten in der dezentralen Einrichtung (DE) simuliert werden,
• im Übertragungsnetzwerk (ÜN) lediglich eine Timeoutzeit zwischen 1 s bis 25,5 s einzuhalten ist.

8. Verfahren nach Anspruch 7, **dadurch gekennzeichnet, dass** zeitkritische Telegramme, wie beispielsweise ATR (answer to reset), im Mobilfunkgateway (DE) erzeugt werden.

9. Verfahren nach Anspruch 7, bei dem der SIM-Server (SS) ein SIM-Karten-Array (SKA) mit zumindest in Zeilen angeordnete SIM-Karten (SK) und eine Einrichtung zur SIM-Verwaltung (ESV) mit einem dem SIM-Karten-Array (SKA) nachgeschalteten SIM-Multiplexer umfasst, **gekennzeichnet dadurch**
- **dass** das System beliebig skalierbar ist,
- **dass** eine SIM-Karte (SK) nur in einer Applikation verwendet wird (SIM-Assignment-Management),
- **dass** die zu übertragende Datenmenge minimiert ist (SIM-Emulation) und
- **dass** durch die transparente Weitergabe der Authentisierungsdaten zwischen SIM-Karten Emulator (SKE) und physikalischer SIM-Karte (SK) die Sicherheitsbedingungen des SIM in jeder Hinsicht eingehalten sind, die an das Übertragungsnetzwerk (ÜN) gestellten Anforderungen bezüglich Datenrate und Verzögerungszeiten - gegenüber einer transparenten Weitergabe aller SIM-Karten - erheblich herabgesetzt sind und für Protokollelemente auch Datenübertragungsnetzwerke mit weit geringerer Übertragungsqualität ohne Einschränkung der Funktion verwendet werden können.

10. Verfahren nach Anspruch 9, **dadurch gekennzeichnet, dass** die SIM-Verwaltung (ESV) eine zentrale Verwaltungs-Software mit folgenden Funktionen aufweist:
- Oberfläche für die Verwaltung der SIM-Karten (SK),
- Datenbank zur Speicherung der SIM-Karten Informationen,
- Zuweisung einer SIM-Karte (SK) auf Anfrage einer Applikation,
- Regelmäßige Überprüfung auf Verfügbarkeit der SIM-Karten (SK) im SIM-Karten-Array (SKA);
- Weiterleitung dieser Information an die Applikation,
- Sperrung der zugewiesenen SIM-Karten (SK) gegenüber anderen Applikationen und
- Realisierung verschiedener Algorithmen für die Vergabe der SIM-Karten (SK) an die Applikationen durch:
• Zufall,
• Simulation bewegter SIM-Karten (SK),
• Round Robin,
• ereignisgesteuert, insbesondere durch Zeit- oder Geldkontingent, so dass über die Verwaltungssoftware in der SIM-Verwaltung (ESV) beliebig viele externe Mobilfunk-Endeinrichtungen gezielt auf verschiedene - durch im SIM-Karten-Array (SKA) hinterlegte SIM-Karten (SK) repräsentierte - Mobilfunk-Benutzerkonten einbuchbar sind und diese auch die Mitnahme der Mobilfunkrufnummer zu einem anderen Provider (number portabilty) ermöglicht.

## Claims

1. Message transmission system for the use of SIM-cards (SK) via remote access with a central SIM-server (SS), said central SIM-server (SS) is connected via a transmission network (ÜN) with at least a standalone device (DE), wherein:
• said SIM-server (SS) comprises a SIM-card Array (SKA) having SIM-cards (SK) arranged at least in lines and a SIM-management device (ESV) having a SIM-multiplexer connected downstream of the SIM-card array (SKA),
• said standalone device (DE) having a SIM-card emulator (SKE), a SIM-card interface (SKS) and a mobile radio module (GSM), and
• a profile data record for SIM card emulation is stored in a memory of the SIM-card emulator (SKE) in order to remotely access the standalone device (DE) and
• only a transparent transfer of authentication data between said SIM-card emulator (SKE) and said SIM-card (SK) of said SIM-card Array (SKA) is done via said transmission network (ÜN),
• so that only a network-internal delay time between 1 s and 25.5 s of said transmission network (ÜN) had to be fulfilled.

2. Message transmission system according to claim 1, wherein said standalone device (DE) is a mobile radio gateway, thus enabling a SIM-roaming and a termination of calls from landline network to mobile radio network by said mobile radio gateway (DE).

3. Message transmission system according to claim 1, wherein said SIM-cards Array (SKA) comprises further in columns arranged SIM-cards (SK) and that at least one router (R) is interposed between said transmission network (ÜN) and said SIM-server (SS) and is connected with said SIM-management device (ESV) and said SIM-cards Array (SKA).

4. Message transmission system according to claim 3, wherein for internal communications several routers (R) are connected by a local area network (LAN).

5. Message transmission system according to claim 1 and 2, wherein said mobile radio gateway (DE) comprises a mobile radio application (GSMA), which includes the following functions:
- Request for a SIM-card (SK) by a management software of said SIM-management device (ESV)
- Transfer of SIM-cards-ID to said SIM-card emulator (SKE),
- Start of actual mobile radio application (GSMA),
- Turn-Off said mobile radio module (GSM), if "SIM-card is not available" is notified by said management software and
- Application specific functions, namely Least Cost Routing to roaming charges, time-dependent or alternative routing, call detail records, management access via ISDN or intranet (IP) and splitting to 2 SIM-cards or 4 SIM-cards per said mobile radio module (GSM).

6. Message transmission system according to claim 5, **characterized in that** said mobile radio gateway (DE) is designed as a PC and the integration of said SIM-card emulator (SKE) is in the form of a plug-in circuit board, **characterized in that** the configuration is carried out by PC Windows program and by sending an SMS from said PC and **characterized in that** on said PC a remote access for remote service, remote configuration and download is provided, so that an IP-connection or an monitoring, management and configuration is carried out by said remote services and that mobile groups with different channel assignment strategies are formed and voice guidance for users can be carried out.

7. Method for the use of SIM-cards by remotely access with a central SIM-server (SS), which is connected via a transmission network (ÜN) with at least a standalone device (DE), in particular a mobile radio gateway (DE), wherein:
• Remote access to said standalone device (DE) a profile data record to the SIM-card replica is stored,
• only a transparent transfer of authentication data between a SIM-card emulator (SKE) and a SIM-card (SK) is done via said transmission network (ÜN),
• all other data in said standalone device (DE) are simulated,
• only a network-internal delay time between 1 s and 25.5 s of said transmission network (ÜN) had to be fulfilled.

8. The method of claim 7, wherein time-critical messages, such as ATR (answer to reset), are generated by said mobile radio gateway (DE).

9. The method of claim 7, whereby said SIM-server (SS) comprises a SIM-card Array (SKA) having SIM-cards (SK) arranged at least in lines and a SIM-management device (ESV) having a SIM-multiplexer connected downstream of the SIM-card array (SKA), **characterized in that**
- said system is scalable,
- a SIM-card (SK) in only used by one application (SIM-assignment management),
- the transferred amount of data is minimized (SIM emulation) and
- through said transparent transfer of authentication data between said SIM-card emulator (SKE) and physical SIM-card (SK) the safety conditions of the SIM in all respects are fulfilled, the requirements to the transmission network (Overnight) regarding data and delay times - compared to a transparent transmission of all SIM-cards - are significantly reduced and also protocol elements can be used for data networks with much lower transmission quality without limiting the function.

10. The method of claim 9, wherein said SIM-management device (ESV) comprises central management software which includes the following functions:
- Surface for the management of SIM-cards (SK),
- Database for storing the SIM-card information,
- Assignment of a SIM-card (SK) on request of an application,
- Regularly check of availability of SIM-cards (SK) arranged in that SIM-cards Array (SKA);
- forwarding said information to said application,
- Blocking said assigned SIM cards (SK) against access by other applications and
- Realization of various algorithms for the assignment of SIM cards (SK) to said applications by:
• randomly selecting,
• simulation of moving SIM-cards (SK),
• Round Robin,
• event-driven, especially by time or money quota
so that by said management software of said SIM-management device (ESV) any number of external mobile radio terminals can be selectively registered - by said SIM cards (SK) arranged in said SIM-cards Array (SKA) - for different mobile user accounts and said management software made it possible for transferring said mobile phone number to another provider (number portability).

## Revendications

1. Système de transmission de données pour l'utilisation des cartes SIM (SK) avec un server central pour cartes SIM (SS) à l'aide d'une télécommande étant en connexion avec au moins un dispositif décentral (DE), où
• Le server pour cartes SIM (SS) comprend un groupe de cartes SIM (SKA) avec au moins des cartes SIM (SK) rangées en lignes et un dispositif pour la gestion des cartes SIM (ESV) doté d'un multiplexeur SIM étant connecté après le groupe de cartes SIM (SKA)
• Le dispositif décentral (DE) comprend un émulateur de cartes SIM (SKE), une interface pour cartes SIM (SKS) et un téléphone portable (GSM) et
• Pour la télécommande du dispositif décentral (DE) des données, représentant l'image des cartes SIM, sont stockées dans la mémoire de l'émulateur de cartes SIM (SKE) et
• La transmission transparente des données d'authentification n'est effectuée que entre l'émulateur de cartes SIM (SKE) et la carte SIM (SK), cette dernière étant dans le groupe de cartes SIM (SKA) à l'aide d'un réseau de transmission (ÜN)
• De façon qu'un délai d'attente entre 1s et 25,5s soit à réaliser dans le réseau de transmission (ÜN).

2. Le système de transmission de données selon revendication 1 est **caractérisé en ce que** le dispositif décentral (DE) est une passerelle pour la téléphonie mobile, permettant une itinérance SIM et un transfert des appels du réseau de téléphone fixe dans le réseau du téléphone mobile à l'aide de la passerelle pour la téléphonie mobile (DE).

3. Le système de transmission de données selon revendication 1 est **caractérisé en ce que** le groupe de cartes SIM (SKA) possède en plus des cartes SIM (SK) rangées en colonnes et que entre le réseau de transmission (ÜN) et le server SIM (SS) réseau de transmission (ÜN) et le server SIM (SS) se trouve au moins un router (R), lequel est connecté avec le dispositif pour la gestion de cartes SIM (ESV) et avec le groupe de cartes SIM (SKA).

4. Le système de transmission de données selon revendication 3 est **caractérisé en ce que** plusieurs router (R) pour la communication interne sont connectés entre eux à l'aide d'un réseau local (LAN).

5. Le système de transmission de données selon revendication 1 et 2 est **caractérisé en ce que** la passerelle pour la téléphonie mobile (DE) possède une application de téléphonie mobile (GSMA) laquelle comprend les fonctions suivantes :
- Demande d'une carte SIM (SK) pour l'installation de la gestion de cartes SIM (ESV) à l'aide d'un logiciel de gestion,
- Transfert de l'identification des cartes SIM dans émulateur de cartes SIM (SKE)
- Départ de l'application véritable de téléphonie mobile,
- Arrêt du téléphone mobile (GSM), si le logiciel de gestion annonce que « la carte SIM n'est pas disponible » et
- des fonctions spécifiques d'applications, telles que : Least Cost Routing pour des frais d'itinérance, le routing en fonction de temps ou alternatif, Call Detail Records, l'accès de gestion par RNIS ou l'intranet (IP) et l'attribution d'appels à deux ou quatre cartes SIM par téléphone mobile.

6. Le système de transmission de données selon revendication 5 est **caractérisé en ce que** la passerelle pour la téléphonie mobile (DE) est un microordinateur et l'intégration de l'émulateur de cartes SIM (SKE) est réalisée par une carte à puce, que la configuration est réalisée à l'aide d'un programme Windows et l'envoie des SMS est exécuté par microordinateur et qu'un accès par télécommande au niveau du microordinateur est prévu pour une télémaintenance, une téléconfiguration et un téléchargement, pour qu'une connexion à l'internet ou une surveillance, la gestion et la configuration par télémaintenance puissent être effectuées, pour que des groupes de canaux de téléphonie mobile puissent être formés avec des différentes stratégies d'occupations et pour que le guidage par voix pour les utilisateurs puisse être réalisé.

7. Procédé pour l'utilisation des cartes SIM par télécommande avec un server SIM central (SS), lequel est connecté à un réseau de transmission (ÜN) avec au moins un dispositif décentral (DE), surtout une passerelle pour la téléphonie mobile (DE), où
• Des données représentant les images des cartes SIM sont stockées pour la télécommande du dispositif décentral,
• Le transfert transparent des données d'authentification entre l'émulateur de cartes SIM (SKE) et la carte SIM (SK) s'effectue seulement à l'aide du réseau de transmission,
• Toutes les autres données sont simulées dans le dispositif décentral (DE),
• Dans le réseau de transmission (ÜN) un délai d'attente entre 1s et 25,5s est à respecter.

8. Procédé selon revendication 7 est **caractérisé en ce que** des télégrammes critiques en temps, comme par exemple ATR (answer to reset), sont créés dans la passerelle pour la téléphonie mobile (DE).

9. Procédé selon revendication 7, où le server SIM (SS) comprend un groupe de carte SIM (SKA) avec au moins des cartes SIM (SK) installées en lignes et un dispositif pour la gestion de cartes SIM (ESV) avec un multiplexeur SIM étant connecté après le groupe de cartes SIM (SKA) est **caractérisé en ce que**
• Le système est à volonté évolutif,
• Une carte Sim est seulement utilisée dans une application (SIM-Assignment-Management )
• La quantité de données à transmettre est minimisée ( Emulation SIM ) et
• Les conditions de sécurité SIM sont respectées dans tous les sens par le transfert transparent des données d'authenticité entre l'émulateur de cartes SIM (SKE) et les cartes physiques SIM (SK), les exigences concernant le taux de transfert et les retards vis-à-vis d'un transfert transparent de toutes les cartes SIM sont diminuées et on peut utiliser des réseaux de transmission de données avec une qualité de transmission réduite sans restriction de la fonctionnalité pour des éléments de protocole.

10. Procédé selon revendication 9 est **caractérisé en ce que** la gestion SIM (ESV) possède un logiciel de gestion central avec les fonctions suivantes :
- Système d'exploitation pour la gestion des cartes SIM (SK)
- Base de données pour la mémorisation des informations des cartes SIM
- Attribution d'une carte SIM (SK) à la demande d'une application
- Vérification régulière de la disponibilité des cartes SIM (SK) dans le groupe de cartes SIM (SKA)
- Transfert de cette information à l'application
- Blocage des cartes SIM (SK) attribuées vis-à-vis d'autres applications et
- Réalisation de différents algorithmes pour l'attribution des cartes SIM (SK) aux applications par:
• Hasard
• Simulation des cartes SIM (SK) circulées
• Round Robin
• Commandé par un événement, surtout par un contingent de temps ou d'argent
Ainsi qu'un nombre quelconque de terminaux de téléphonie mobile externes peut être dirigé et enregistré sur différents comptes d'utilisateurs représenté par des cartes SIM (SK) étant installé dans les groupes de cartes SIM (SKA) et ce fait permet le transfert du numéro de téléphone mobile à un autre fournisseur d'accès à la téléphonie mobile (number portability).
